# EUROPEAN PATENT APPLICATION

(11) **EP 2 562 851 A1**
(43) Date of publication of application: **27.02.2013**
(21) Application number: 11178549.9
(22) Date of filing: 23.08.2011
(51) Int. Cl.: H01M 4/04, C25D 11/12

(54) **Method for producing an electrode material comprising nanowires**

(71) Applicant: Ürgen, Mustafa K., Istanbul (TR); Timur, Servet I., Istanbul (TR); Kazmanli, Kürsat M., Istanbul (TR); Solak, Nuri, 34303 Istanbul (TR); Bayata, Fatma, 10020 Balikesir (TR)
(72) Inventor: Ürgen, Mustafa K., Istanbul (TR); Timur, Servet I., Istanbul (TR); Kazmanli, Kürsat M., Istanbul (TR); Solak, Nuri, 34303 Istanbul (TR); Bayata, Fatma, 10020 Balikesir (TR)
(74) Representative: Sevinç, Erkan

(57) **Abstract**

The present invention is directed to a cost effective and quick method for producing nanowire electrode materials which eliminates the drawbacks of prior art by way of forming nanowires prior to formation of a support layer. In more detail, the method of the present invention comprises etching of a substrate material, such as alumina, to form a porous nano-pattern, etching of the pore bottoms and simultaneously coating the pore bottom sections with an etchant solution such as a zincate solution, and electroplating a transition metal to said pores until nanowires are filled within the pores and a thick metallic film is formed on the nanowire structure such that this metallic layer function as a support material for the said nanowires. The substrate is subsequently removed leaving behind vertically aligned free standing nanowires with a self-formed electroactive layer on their surfaces

## Description

### Technical Field of the Invention

The present invention relates to a method for producing an electrode material for use in electrochemical devices, particularly in electrochemical capacitors. The present invention pertains also to an electrode material comprising free standing nanowires with a self-formed electroactive layer on their surfaces having improved capacitance.

### Background / Summary of the Invention

The present invention provides an improved method for producing an electrode material comprising anodizing of a substrate material, such as aluminum, to form a porous nano-pattern, etching and activating of the pore bottoms in a solution, such as zincate and filling the pores starting from their activated bottoms with metals such as Ni with an electroplating step until nanowires are filled within the pores and a thick metallic film is formed on the nanowire structure such that this metallic layer function as a support material for the said nanowires. The nanowires created by this method are single or polycrystalline entities which possess high electrical conductivity inherent to their structure. The substrate is subsequently removed in a suitable chemical that only/mainly attacks to the template leaving behind vertically aligned free standing nanowires. The method is advantageous in many aspects, as for instance various process steps of the conventional applications are eliminated and an electrode material with improved capacitance performance is obtained. Moreover, as a result of the preparation method used herein, these metallic nanowires possess a thin electroactive (oxide-oxyhydroxide-hydroxide based) layer with proper composition to make them active as electrode materials. Thus, further steps of oxidation - activation as required for growing electroactive layers are eliminated.

In recent years, producing electronic devices with small size and improved performance was a major challenge in the electronic industry. To achieve a high performance/size value power supply devices such as fuel cells, batteries and electrochemical capacitors attracted considerable attention for those skilled in the art having the objective of obtaining power supply devices delivering energy with high power as well as high cycle life at relatively low cost.

Faradaic and non-faradaic reactions in the electrochemical devices such as electrical double layer capacitors (EDLC) and pseudo-capacitors mostly occur at the interface of electrode/electrolyte in a charge-discharge process. It is therefore desirable to provide electrode materials with high specific surface area and good wettability in order to enhance their charge storage capability. Besides the high surface area, an ideal supercapacitor electrode material should also possess certain characteristics in terms of capacitive behavior, electrochemical stability and electrical conductivity.

To achieve these objectives, carbon materials such as activated carbon, carbon fiber cloth, carbon aerogels and foams, and various carbonaceous nanostructures are commonly used in EDLCs because of their high surface area. These traditional EDLCs, however are limited by their maximum capacitances of about 40 mF/cm² due to inaccessibility of the total surface area to the electrolyte and their high internal resistance. An alternative way of overcoming the aforementioned problems is using faradaic (reversible redox) pseudo-capacitive electrode materials such as oxides of ruthenium and iridium having high specific capacitance values ranging from 720 to 760 F/g. These materials, however suffer from high costs and toxicity rendering their use very limited.

Due to the reasons above, researchers have been focusing on seeking of alternative materials ideally suited for electrode applications. It was noted that transition metal oxides and hydroxides such as NiO, CoOₓ, MnO₂, Ni(OH)₂ and Co(OH)₂ would well be tailored for redox type capacitors. Nickel oxide and hydroxide, *inter alia,* attracted much more attention owing to their low cost, easy availability, environment friendly nature and satisfactory electrochemical performance with a specific capacitance of about 240-277 F/g (for a single electrode).

One of the attempts to produce a metal electrode having high specific area was disclosed in US 2010/0233496 wherein the metal electrode was prepared according to a procedure involving initially forming of a metal substrate at one side of a template, forming of nanowires inside the pores of said template, removing the template and then coating of the structure with a metal oxide such as NiO. This prior art reference, however does not clarify of how the template is prepared, and is also bearing a number of drawbacks such as an extra coating step for coating of metal oxides along the periphery of the nanowires. According to the procedure above, metallic support layer (metal substrate) is formed prior to the formation of nanowires. It is to be noted that subsequent formation of nanowires may not be desirable because of the loss of capacitance and conductivity.

WO 2008/127811 is also describing a procedure for producing a nanowire electrode wherein nanowires are electroplated through the pores of a membrane subsequent to formation of the metallic support layer. This again fails to provide satisfactory and efficient capacitance and conductivity because of the reasons above.

Similarly, US 2007/0059584 discloses a method comprising forming of a metal layer (support layer) by plating on the surface of the alumina film, removing bottoms of the pores and then forming nanowires in the pores, removing the alumina film and depositing a metal as an active material on the surface of the nanowires. The procedure involves also formation of a seed layer on one side of the aluminum substrate to facilitate electrodeposition of the metal layer (support layer). The procedure is therefore long and costly to implement as it requires the additional step of depositing a seed layer, and is also suffering of pure conductivity because the support layer is formed in advance of forming the nanowires. In addition, nanowire deposition within the pores is carried out by virtue of the preformed conductive support layer, but this procedure causes the nanowire deposition to be rather longer and of pure quality because the inner surface of the pores still remains nonconductive.

To this end, it is one of the objects of the present invention to form a self-standing nanowire electrode which has better performance by virtue of forming the nanowires in advance of forming the metallic support layer resulting in single or polycrystalline form with high electrical conductivity, which are directly supported by the same material without any interface

The electroactivity of electrode material is due to the substochiometric oxides, oxyhydroxides and/or hydroxides. For creating electroactive materials, the powder of substochiometric oxide of the metal is mixed with a suitable matrix or the metal surface is oxidized under appropriate conditions to form this structure on its surface. The sequence of steps used in the method of the present invention results in the formation of said electroactive layer on the surface of the metal without further oxidation-activation requirement.

A further object of the present invention is to provide a complete method wherein the extra steps of prior art procedures are eliminated.

Another object of the present invention is to provide a compact method for producing a nanowire electrode involving preparation of an alumina porous (AAO) substrate that is suitable for high quality nanowire deposition, thereby allowing the production of a highly electroconductive electrode material possessing a self-formed electroactive surface layer with better capacitance.

Still a further object of the present invention is to provide a continuous process without interruptions in the course of depositing nanowires and the support layer on a substrate.

Further objects and advantages of the present invention are explained in the detailed description given below, and objectives of the invention are solved by a novel method essentials of which are disclosed in claim 1.

### Brief Description of the Figures

Figure 1 shows an ideal honeycomb like hexagonal porous structure formed after the anodization of an aluminum substrate;
Figure 2 shows SEM images of free standing Ni nanowires supported by nickel base film in 10.000 magnifications (30.000 magnification is shown in inset).
Figure 3 shows the cross section SEM image of free standing Ni nanowires supported by nickel base film.
Figure 4 is a stepwise demonstration of producing an electrode material having nanowires according to the present invention.
Figure 5 gives the XPS spectrum of the self-formed electroactive oxyhydroxide layer on the metallic nickel nanowires for Ni 2p region.
Figure 6 gives the XPS spectrum of the self-formed electroactive oxyhydroxide layer on the metallic nickel nanowires for O 1s region.
Figure 7 represents the CV diagrams of electrodeposited Ni nanowires at a scan rate of 25 mV/s for 10 cycles.
Figure 8 represents the CV diagrams of electrodeposited Ni nanowires at a scan rate of 25 mV/s for 1000 cycles.
Figure 9 shows discharge curves according to a number of experiments with various number of cycles wherein charge current was 20 mA, discharge current was 0.5 mA, charge duration was 20 seconds, discharge duration was 400 seconds, min. potential was -200 mV, and max. potential was 480 mV.

### Detailed Description of the Invention

With the novel method of the present invention, the inventors surprisingly found that conventional methods for preparing a substrate base material and nanowires can be successfully adopted for manufacturing of nanowire electrode materials with good conductivity and capacitance.

The present invention is directed to a cost effective and quick method for producing electrode material composed of nanowires which eliminates the drawbacks of prior art by way of forming nanowires prior to formation of a support layer. In the context of the present invention, the term "nanowire" refers to thin and fibrous metallic structures generally extending in the vertical direction and deposited within a nano-pattern having through holes. The term "supporting layer" refers to a metallic layer formed as a coating on one side of a substrate that bears the nanoholes, and supporting the vertically aligned nanowires in free standing position. The term "substrate" refers to an aluminum based template material which is electrochemically oxidized (anodized) and then pore bottom activated for removal of barrier layer and making the pore bottoms electrodepositable.

According to a first aspect of the present invention, there is provided a novel method for producing electrode materials, comprising preparation of a substrate having the aforementioned structure, electrodepositing the nanowires within said pores, proceeding with the process until a film of the conductive material for supporting the nanowires is formed on one side of the substrate and then removing of the aluminum and alumina substrate, and exposing the nanowires as free standing nano structures vertically aligned with the supporting layer. Moreover, as a result of the preparation method used, these metallic nanowires possess a thin electroactive layer with proper composition to render them active as electrode materials. Thus, further steps of oxidation as required with the conventional methods of production using AAO templates for growing nanowires are eliminated. It is to be noted that the novel method disclosed hereby allows continuous operation when deposition of the supporting layer is conducted without interruption during electrodeposition of the nanowires. In this manner, an electrode material having the nanowires and support layer integrated and made of the same material is obtained. This structure already has the electroactive support layer on the surfaces of the nanowires. As may be appreciated by those skilled in the art, the procedure as summarized above is advantageous in many respects as it allows continuous deposition of the electrode material within just one step wherein the resulting material has no boundary resistance locations between the nanowires and supporting material because both are produced from the same material without interruption. This is however, not possible with the conventional techniques requiring formation of the supporting layer and removal of the aluminum base before producing the nanowires.

In a preferred embodiment, the substrate material functioning as the base and template for producing the electrode material of the present invention is prepared according the procedure as described in WO 2008/034471-A1 (Urgen et al.). Therefore, this document is hereby incorporated by reference in its entirety.

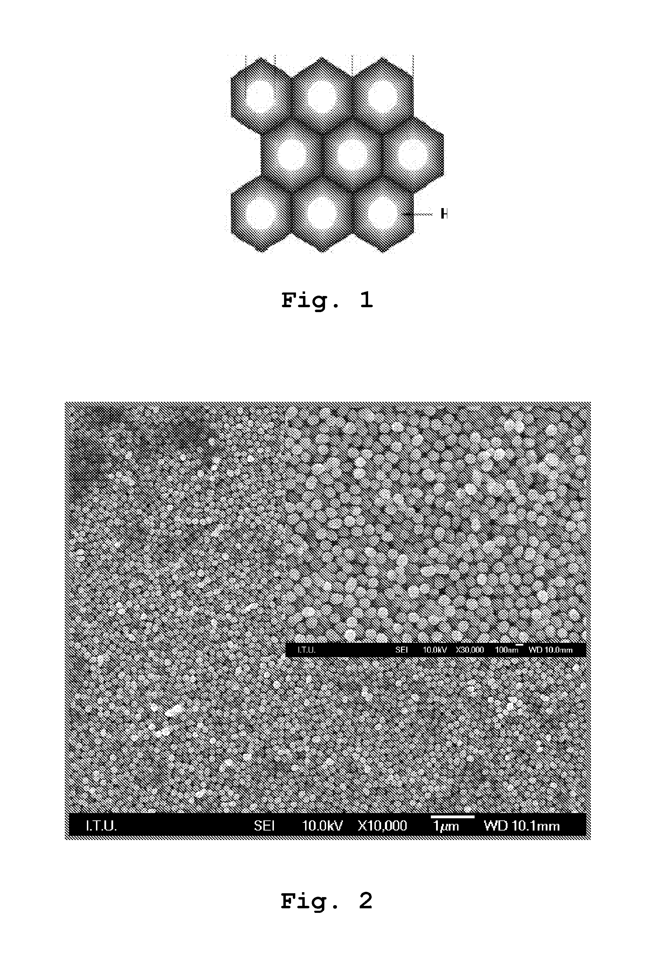

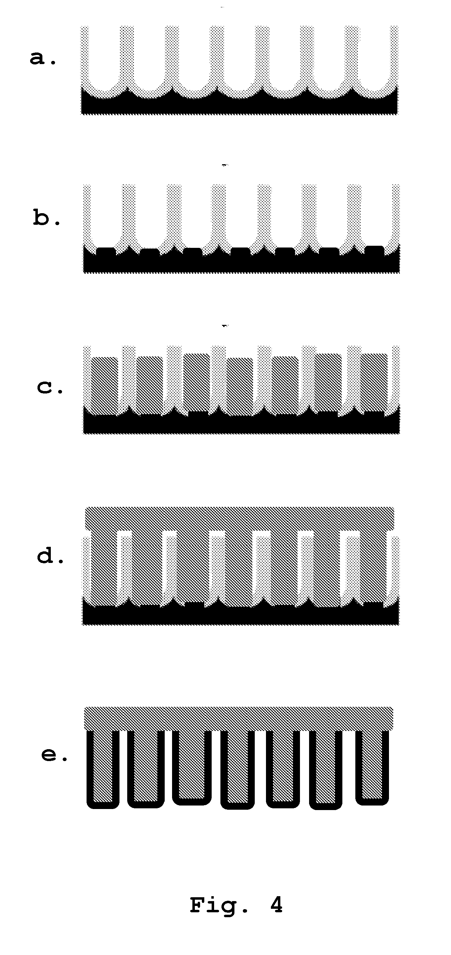

Accordingly, an aluminum structure is anodized in a suitable solution to form a porous oxide layer as shown in Fig. 4(a). The porous oxide layer has a nonconductive bottom named as barrier layer which does not allow direct electrodeposition. Porous layer is mostly desired to have regular arrays of nanoholes such as a honeycomb like hexagonal structure as shown in Figure 1.

In a preferred embodiment of the present invention, a nanostructure suitable for use as a pattern in manufacturing of an electrode material is produced with a procedure comprising the steps of;
- anodizing the aluminum substrate in the presence of an acidic electrolyte such as sulfuric acid, oxalic acid or phosphoric acid,
- immersing the porous structure into a zincate solution for etching the bottoms and inner walls of the nanoholes and depositing a thin Zn film in bottom sections of the through holes as demonstrated in Fig. 4(b).

Thereby, said structure is made suitable for electrochemical deposition of various materials within the porous structure for obtaining nanowires and a support layer in the form of a thick planar film. Other methods for thinning the barrier layer such as changing the anodization voltage may, nevertheless be applied prior to zincating in order to shorten duration of the activation process.

In frame of the procedure above, obtaining a uniform substrate with good distribution of nanoholes in the form of hexagonal arrays is generally desired for obtaining the nanowires with better characteristics. Thus, the procedure may optionally comprise a second anodization step in order to form the desired porous layer with hexagonal arrays of nanoholes. The procedure may also comprise polishing of the aluminum substrate before the treatment steps wherein this step is conducted by a chemical treatment or electro-polishing or a combination thereof.

In the aforementioned procedure, surface polishing of the aluminum substrate has certain advantages for successful formation of a uniform porous layer in the form of regular arrays of nanoholes. The said metal substrate is subjected to a heat treatment at a temperature around 450 - 550 °C after which the grain size extends and becomes homogenous through the substrate structure. Chemical treatment of the metal substrate surface can be conducted for example by sequential steps of NaOH and HNO₃ treatment. Electro-polishing is relatively an advanced way of surface polishing which is mostly preferred in sensitive nano implementations rather than the previous methods or it is conducted in combination with the previous methods. Apparently, the metal surface treated with a combination of thermal and electro-polishing treatment steps provides better surface properties with improved smoothness.

During the anodization steps for preparation of the nano-pattern, an oxide layer consisting of a barrier layer and a porous layer grows up in the presence of an acidic aqueous solution as electrolyte. Said electrolytic solution may comprise the well-known acids such as sulfuric acid, oxalic acid, phosphoric acid and chromic acid.

The acid content in the electrolytic solution of the anodization step can be of 1% to 50% v/v. A 3-15% (v/v) acidic solution is particularly preferred. Applied voltage through the electrochemical treatment may vary in the range of 5 V to 200 V depending on the electrolytic solution and the desired thickness of the oxide layer. A voltage ranging from 20 V to 60 V is generally preferred.

Eventually, it should be noted that the above procedure is advantageous in that the zincate treatment provides simultaneous etching of the pore bottoms and deposition of Zn there through without needing exhaustive procedures as in the prior art. Such an electrolytic process enables utilizing of the whole base structure as an electrode since pore bottoms are made electro-conductive with a substantially pure Zn film.

The zincate solution as described above can be an alkaline solution of ZnO and/or Zn(OH)₂ that is capable of depositing the aforementioned Zn film in the pore bottoms while etching said bottom sections for making them electro-conductive. To achieve this object a strong base such as NaOH, KOH, Ba(OH)₂, Ca(OH)₂, LiOH, RbOH, CsOH and Sr(OH)₂ can be used for obtaining the desired alkalinity. NaOH is particularly preferred. ZnO - Zn(OH)₂ / Base ratio may vary 0.1 to 1.8 (by weight) in said zincate solution bath, however, said ratio is preferably kept in the range of 0.4 to 0.8 by weight. The strong base in the solution behaves as an electron donor for the formation of the non-ionic Zn film in the pore bottoms by way of a number of sequential reactions as described by the inventors in WO 2008/034471-A1.

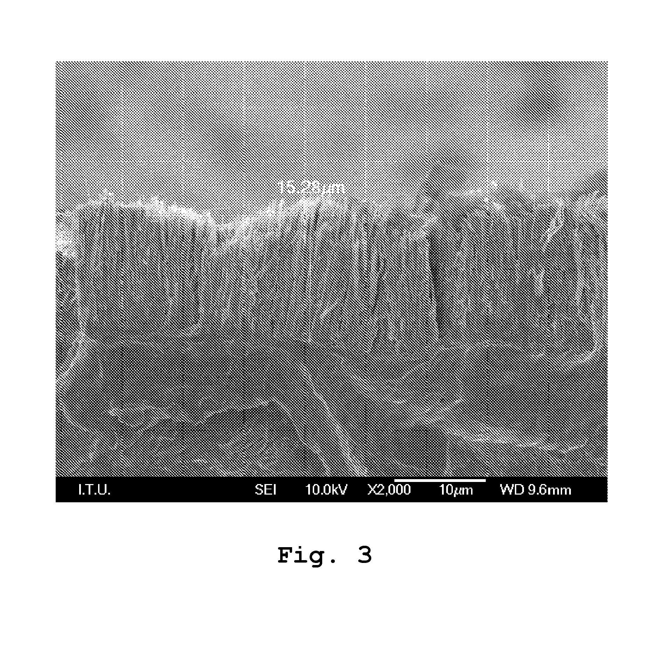

The zincate treated anodized aluminum material having uniform arrays of nanoholes is further treated with an electrodeposition step for the formation of nanowires as shown in Fig. 4(c) and subsequently of a supporting layer without any interruption as demonstrated in Fig. 4(d). Accordingly, a transition metal is electroplated within the nanoholes, and the process is continued until a thick film (about 5-300 microns) is obtained on the surface of the substrate, which film is actually designed to be a supporting layer for the nanowires. Upon completion of the process, aluminum and oxide parts of the substrate material are dissolved leaving behind a structure of nanowires on a flat supporting surface as demonstrated in Fig. 4(e). The SEM images of the eventual product as depicted in Figs 2 and 3 show planar and cross sectional views of the electrode material according to the present invention.

The metal deposited and electroplated by the procedure above can be the transition metals between IB and VIIIB groups of the periodic table, but Ni, Mn, Ru, Co and Mn are particularly preferred.

Electro-deposition of metals within the conductive porous nanostructure of the present invention can be carried out in the presence of a bath solution consisting of nickel salts such as sulphate, chloride, sulfamate salts and combinations thereof, and a weak acid such as H₃BO₃, H₃PO₄, CH₃COOH, CH₃COCOOH and C₅H₅NCOOH. H₃BO₃ is particularly preferred. Weight ratio of NiSO₄ / weak acid may vary in the range of 1 to 50, however, said ratio varies more preferably in the range of 5 to 8. Current density values may vary in the range of 0.1 to 20 A/dm², more preferably 0.2 to 2 A/dm² during the metal deposition. In a preferred embodiment, a solution comprising 20-45%wt of NiSO₄ and 2-8%wt of H₃BO₃ is used as an electrolyte during electrodeposition.

The subsequent removal of the aluminum anodic oxide (template) can be conducted by way of dissolving the aluminum based structure in an alkaline solution such as hot aqueous NaOH. The eventual product which is very suitable to be used as an electrode material comprises nanowires having diameters of about 250-600-250 nm while their lengths may preferably be about 5-20 microns.

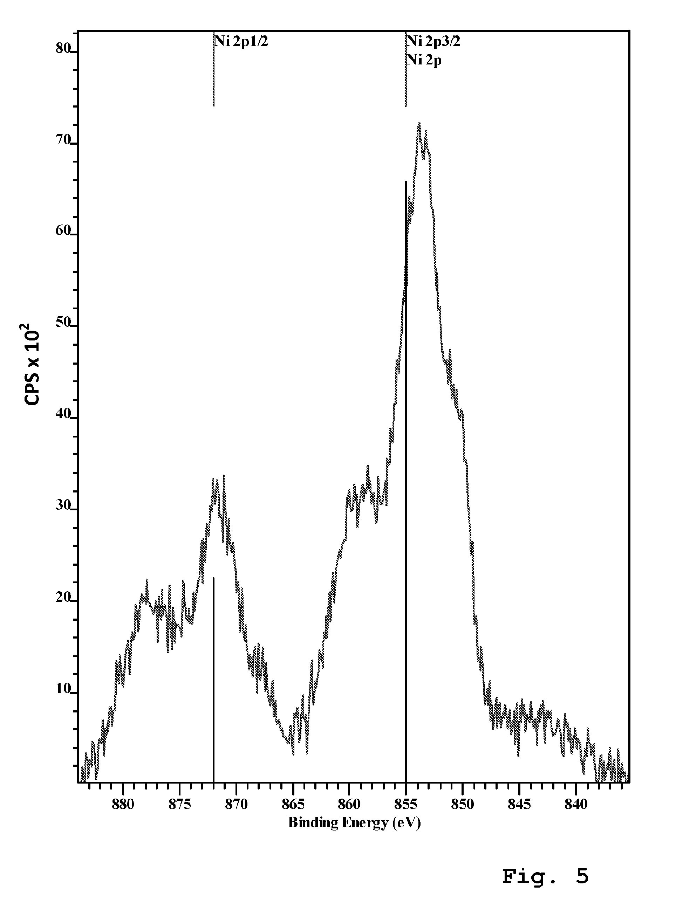

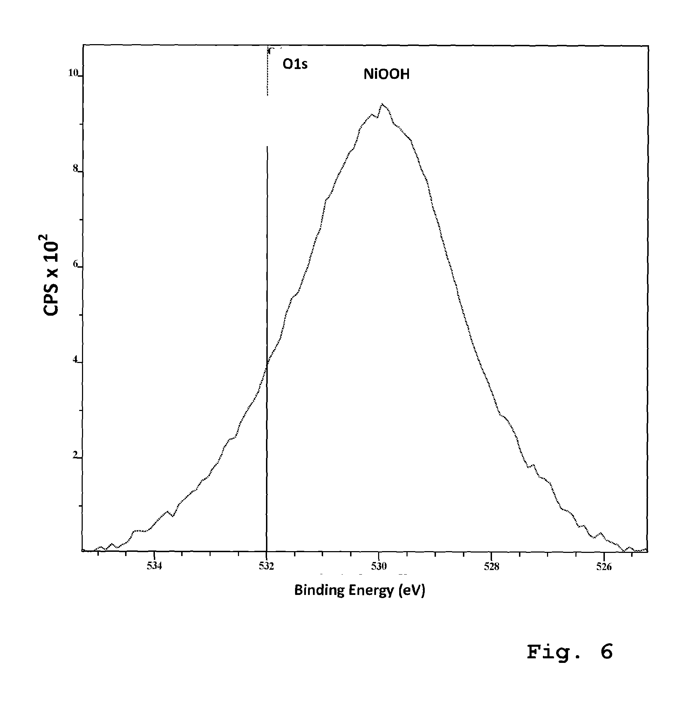

To this end, an electrode material having high specific area and an effective oxide layer with an average thickness of 5-20nm on nanowire surfaces is obtained by way of the advantageous method of the present invention. As noted above, inherent formation of the oxide layer eliminates conventional steps for oxide formation, and furthermore, a continuous process for electrochemically forming the nanowires and a supporting film layer becomes possible unlike the stepwise processes of the prior art. The method not only eliminates the complicated and cumbersome methods, but also improves the electrochemical properties of the eventual product by the self-formed electroactive oxidized layers inherent to the process as illustrated in the following examples and sample characterization experiments associated thereto. The presence of the electroactive layer on the surface of the nanowires is shown in the XPS data supplied in figures 5 and 6 depicting the Ni 2p and 01s regions that clearly show the presence of an hydroxide -oxyhydroxide layers.

Further advantages and best mode of carrying out the present invention are apparent and more recognizable to those skilled in the art in light of the following example and characterization data as shown in the appended figures.

### Example

### Preparation of an aluminum based substrate for use as a template

A pure (99.99%) Al sheet was pretreated in a 10% NaOH solution for a few seconds and then in 10% HNO₃ solution for 10 minutes before the anodization process. Anodization was performed in 0.3 M oxalic acid electrolyte at 70V and 7°C for 30 minutes in order to obtain a porous structure. Subsequently, the sample was rinsed in a zincate solution for 45 seconds to remove the barrier layer and to make the pore bottoms electrically conductive. By means of this activating step it became possible to electrodeposit adherent metals and oxides inside the pores by direct electric current.

### Preparation of the metal electrode material comprising nanowires

An Al template as obtained with the procedure above was electrodeposited with Ni in a solution of 30% wt. of NiSO₄ and 4.5% wt. of H₃BO₃ at 4V and 55°C. In order to obtain vertically aligned free standing nanowires on a metal support layer, electrodeposition was continued after filling the nanoholes of the template until a thick film as the supporting layer was obtained on its surface. The nickel plated sample was then exposed to hot 10% NaOH solution at 60 ± 20 °C to dissolve alumina and aluminum.

### Characterization of the electrode samples

In the context of the laboratory assays, the SEM images of the electrode material having free standing nanowires as depicted in Figs. 2 and 3 were obtained by a Field Emission Gun Scanning Microscope (Jeol 7000F FEG-SEM). Electrochemical characterization of the electrode material as obtained according to above procedure was carried out using cyclic voltammetry (CV) and charge-discharge analysis (chronopotentiometry). A computer controlled PGZ 301 Model Potentiostat was used for all the electrochemical experiments. The electrochemical measurements of the nanowire electrode were performed with a three-electrode electrochemical cell containing 1 M KOH as the electrolyte, a saturated calomel electrode (SCE) as the reference electrode, and platinum as the counter-electrode. The active surface area of the electrode material was 1.0 cm². Cyclic voltammetry was performed in the potential range of -0.2 to 0.48V in 1M KOH aqueous solution at potential scan rate of 25mV/s. Charge and discharge analysis were done in the range of -0.2 to 0.48V vs. Ag/AgCl at constant discharge current density of 20 mA/cm².

According to the SEM images of Figs. 2 and 3, diameters of the nickel nanowires showed a small variation in between 110-120 nm, and lengths of the nanowire arrays were varying between 15-16 µm. The electrode material according to present procedure was studied for the electrochemical redox supercapacitor application. It was used as a supercapacitor electrode material and characterized by CV in 1 M KOH electrolyte.

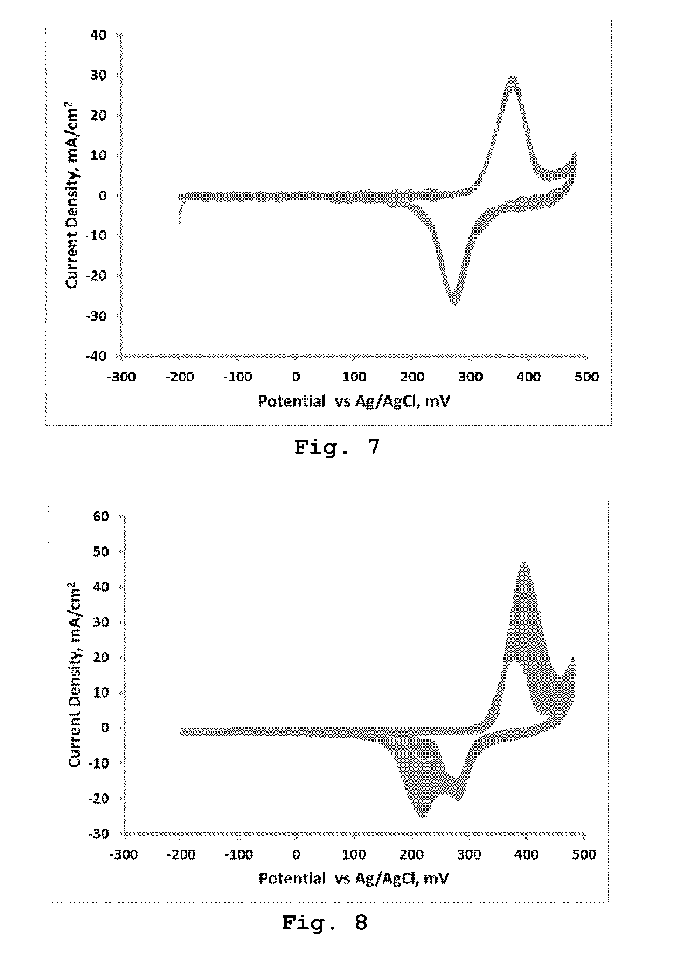

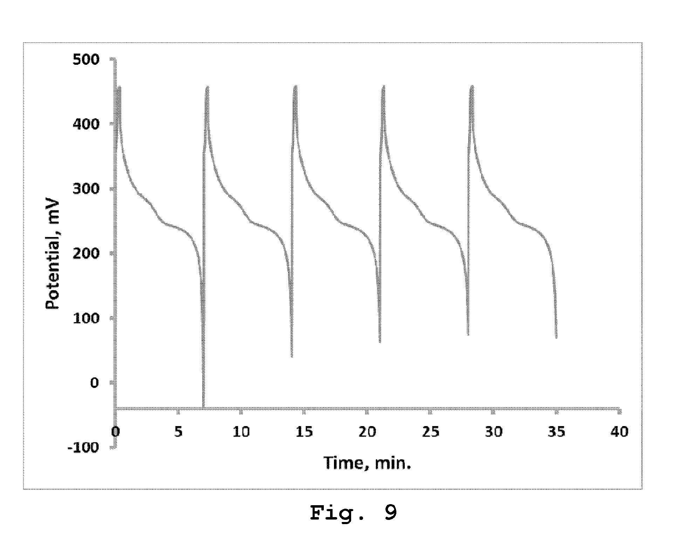

The cycle life tests of free standing Ni nanowire electrode were performed for 10 and 1000 cycles. Figs. 8 and 9 show the variation of current density as a function of cycle number. Current density was being increased as the cycle number increased. This result indicates that free standing Ni nanowire electrode have high stability for long-term capacitor applications.

It is supposed that the high performance is because of the sample preparation method.

Fig. 10 shows discharge curves according to a number of experiments with various number of cycles wherein charge current was 20 mA, discharge current was 0.5 mA, charge duration was 20 seconds, discharge duration was 400 seconds, min. potential was -200 mV, and max. potential was 480 mV. Their capacitances calculated from discharge curves ranged between 0.2-0.7 F/cm² as obtained from their apparent area.

## Claims

1. A method for producing an electrode material for use in an electrochemical device, comprising the steps of:
- providing a porous aluminum substrate having an oxide layer containing through holes suitable for deposition of nanowires, the pores being activated by means of etching bottom sections of the pores and depositing a metal layer on said pore bottoms,
- electrodepositing of a transition metal into the nanoholes for producing nanowires, and
- maintaining the electrodeposition step until a support layer integrated with the nanowires is obtained in the form a metal film of said transition metal.

2. A method according to claim 1 wherein the aluminum substrate is prepared by two anodization steps in an acidic electrolyte selected from the group consisting of sulfuric acid, oxalic acid, phosphoric acid and chromic acid.

3. A method according to claim 1 wherein the method further comprises cleaning and polishing the surface of the aluminum substrate in advance of the zincate treatment.

4. A method according to claim 1 wherein the transition metal is selected from the group consisting of Ni, Ru, Co and Mn.

5. A method according to claim 4 wherein the transition metal is Ni and transition metal oxide is NiO.

6. A method according to claim 1 wherein the activation is carried out by means of immersing the substrate into an alkaline zincate solution comprising ZnO and/or Zn(OH)₂ for etching the pore bottoms and walls of the nanoholes, and simultaneously depositing a Zn film in the pore bottoms, thereby providing electroconductivity of the porous substrate structure.

7. A method according to claim 6 wherein the alkaline zincate solution comprises a strong base selected from the group consisting of NaOH, KOH, Ba(OH)₂, Ca(OH)₂, LiOH, RbOH, CsOH and Sr(OH)₂.

8. A method according to claim 7 wherein the ZnO - Zn(OH)₂ / strong base ratio in the zincate solution varies in the range of 0.1 to 1.8, more preferably in the range of 0.4 to 0.8 by weight.

9. A method according to claim 1 wherein the electrodeposition is carried out in a current density ranging from 0.1 to 20 A/dm².

10. A method according to claim 1 wherein the electrodeposition step is carried out in the presence of an electrolytic solution comprising NiSO₄ and a weak acid selected from the group consisting of H₃BO₃, H₃PO₄, CH₃COOH, CH₃COCOOH and C₅H₅NCOOH.

11. A method according to claim 1 wherein the ratio of NiSO₄ / weak acid varies in the range of 1 to 50, more preferably 5 to 8 (w/w).

12. A method according to claim 1 wherein the electrodeposition is maintained until the thickness of said support layer reaches to 60-80 microns.

13. A method according to claim 1 wherein the method further comprises immersing the electrode material into an alkaline solution for removal of the aluminum and alumina.

14. An electrode material obtainable by the method of claim 1.

15. An electrode material according to claim 14 which is a component of an electrochemical device.
